# EUROPÄISCHE PATENTSCHRIFT

(11) **EP 0 591 707 B1**
(45) Veröffentlichungstag und Bekanntmachung des Hinweises auf die Patenterteilung: **28.07.1999**
(21) Anmeldenummer: 93114641.9
(22) Anmeldetag: 11.09.1993
(51) Int. Cl.: H04N 5/44, H04N 5/46, H04N 9/64

(54) **Verfahren und Schaltungsanordnung zum Umsetzen von digitalisierten Fernsehsignalen**
Method and apparatus for converting digitized television signals
Méthode et dispositif de conversion de signaux de télévision numérisés

(30) Priorität: 05.10.1992 DE 4233368
(43) Veröffentlichungstag der Anmeldung: 13.04.1994
(73) Patentinhaber: LOEWE OPTA GmbH, 96317 Kronach (DE)
(72) Erfinder: Bohl, Roland, Dipl.-Ing., D-96257 Redwitz (DE)

(56) Entgegenhaltungen:
- EP-A- 0 080 712
- EP-A- 0 162 443
- EP-A- 0 262 647
- EP-A- 0 350 765
- EP-A- 0 367 929
- EP-A- 0 423 921
- EP-A- 0 450 445
- EP-A- 0 482 894
- DE-C- 4 233 368
- GB-A- 2 218 877
- FERNSEH UND KINO TECHNIK. Bd. 38, Nr. 6 , 30. Juni 1984 , BERLIN DE Seiten 231 - 238 SCHÖNFELDER H. 'Verbesserung der PAL-Bildqualität durch digitale Interframetechnik'
- FUNKSCHAU. Nr. 14 , 30. Juli 1987 , MUNCHEN DE Seiten 36 - 40 MAUL K.L. ET AL 'TV-Bild ohne Flimmern'
- SMPTE JOURNAL Bd. 90, Nr. 10 , 30. Oktober 1981 , SCARSDALE, NY US Seiten 945 - 948 LOWRY J. ET AL 'Coder/Decoder Units for RGB and NTSC Signals'
- ELECTRONIC COMPONENTS AND APPLICATIONS Bd. 10, Nr. 2 , 28. Februar 1990 , EINDHOVEN NL Seiten 66 - 77 XP000274262 LENTZER A. 'Picture quality improvements in bus-controlled TV receivers'
- IEEE TRANSACTIONS ON CONSUMER ELECTRONICS Bd. 36, Nr. 3 , 30. August 1990 , NEW YORK US Seiten 291 - 295 XP000162850 PEDERSEN H. ET AL 'LINE FLICKER REDUCTION BY ADAPTIVE ADJUSTMENT OF VERTICAL DEFLECTION IN TV RECEIVERS'
- IEEE TRANSACTIONS ON BROADCAST AND TV RECEIVERS Bd. 34, Nr. 3 , 30. August 1988 , NEW YORK US Seiten 420 - 425 XP000002722 ORBEN H. ET AL 'A VLSI CONTROLLER FOR FLICKER FREE TELEVISION DISPLAY'
- GRUNDIG TECHNISCHE INFORMATIONEN. Bd. 32, Nr. 1 , 30. März 1985 , FURTH DE Seiten 40 - 46 MICHEL C. 'Der Multi-Norm-Farb/RGB-Baustein'
- SYMPOSIUM RECORD OF THE 15TH INTERNATIONAL TV SYMPOSIUM , JOINT SESSIONS (BROADCAST AND CATV) MONTREUX CH , 11-17 JUNE 1987 Seiten 181 - 203 SCHEPERS C. ET AL 'D2-MAC , An Integrated multinorm receiver'

## Beschreibung

Die Erfindung betrifft ein Verfahren zum Umsetzen von digitalisierten Fernsehsignalen mit den im Oberbegriff des Anspruchs 1 angegebenen Merkmalen sowie eine Schaltung zur Durchführung des Verfahrens.

Aus dem FKTG-Tagungsband, 11. Jahrestagung vom 21. bis 24. Mai 1984, Seiten 530 bis 533, ist ein gattungsgemäßes Verfahren zur Anpassung des digitalen Empfängerkonzeptes an den Einsatz von Bildspeichern bekannt, bei dem gemäß einer üblichen Methode als Taktfrequenz im digitalen Farbfernsehempfänger das Vierfache der Farbträgerfrequenz gewählt wird. Dies ermöglicht grundsätzlich den Einsatz einfacher Filter und PAL-Demodulatoren. Darüber hinaus treten bei der Einspeisung von PAL-Signalen mit nicht verkoppeltem Farbträger, wie sie beispielsweise aus Videorecordern anliegen können, keine größeren Probleme auf. Aus der Veröffentlichung ist es weiterhin bekannt, Puffer- und Interpolationsschaltungen in Verbindung mit einem Rechner zur Ermittlung der Interpolationskoeffizienten einzusetzen, um die "Normwandlung" der aus dem Decodiervorgang gewonnenen Videosignalkomponenten Y, Y-R, B-Y, in zeilenverkoppelte Komponenten durchführen zu können. Erst durch diese Maßnahme ist ein sinnvoller Bildspeicherbetrieb möglich. Die Veröffentlichung gibt jedoch keine näheren Einzelheiten an, wie dieses zu bewerkstelligen ist.

Der Erfindung liegt das Problem zugrunde, eine Verbesserung der Bildqualität bei einem Fernsehempfänger mit einer farbträgerfrequenzverkoppelten digitalen Signalverarbeitung unter Verwendung des vorher beschriebenen bekannten Verfahrens zu erreichen, ohne daß weitere Digitalanalogwandlungen erforderlich sind, um ein Bild mit einer höheren Zeilenzahl darstellen zu können, wodurch insbesondere ein Großflächenflimmern vermieden werden soll.

Eine weitere Aufgabe besteht darin, daß nur mit einem einzigen Speicher, in der Basisausstattung mit einem Zeilenspeicher oder mit einem Halbbildspeicher oder in erweiterter Form mit zwei Halbbildspeichern oder einem einzigen Vollbildspeicher gearbeitet werden kann.

Eine weitere Teilaufgabe besteht darin, mit der farbträgerfrequenzverkoppelten Signalverarbeitung bis in den Speicher arbeiten zu können und diesen wiederum zeilenverkoppelt auslesen zu können.

Die Aufgabe löst die Erfindung durch die im Anspruch 1 angegebenen Verfahrensschritte sowie durch eine Schaltungsanordnung nach Anspruch 9.

Vorteilhafte Weiterbildungen der Verfahrensschritte zur Anpassung an die jeweilige Norm sind in den Unteransprüchen 2 bis 10 angegeben.

Das Wesen der Erfindung liegt darin, ein Verfahren anzugeben, das es ermöglicht, eine farbträgerfrequenzverkoppelte Signalverarbeitung unter Beibehaltung der Taktfrequenz auch für das Einschreiben der Abtastwerte in den Speicher mit einer zeilenverkoppelten Auslese- und Weiterverarbeitungsschaltung zu verknüpfen, ohne daß hierfür in Zwischenstufen gesonderte D/A- und A/D-Wandler erforderlich sind oder ein weiterer Pufferspeicher notwendig ist.

Das Verfahren kann sich dabei auf der einen Seite bekannter Schaltungseinrichtungen und Verfahrensschritte zur Orthogonalisierung bedienen, wie sie eingangs anhand des Aufsatzes aus dem FKTG-Tagungsband beschrieben worden sind, wobei durch zusätzliche Verfahrensschritte unter Verwendung einer horizontalen Expansion oder Kompression eine Anpassung der Abtastwerte derart erfolgt, daß eine zeilenverkoppelte Weiterverarbeitung der eingespeicherten Signale im Speicher ermöglicht wird.

In den Ansprüchen 10 bis 15 sind vorteilhafte Ausgestaltungsformen einer Schaltung nach Anspruch 9 angegeben, mit der ein Verfahren nach den Ansprüchen 1 bis 8 realisierbar ist, wobei im Falle der Verarbeitung von digitalisierten RGB-Signalen eine Überabtastung angebracht ist, im übrigen aber die gleichen Signalverarbeitungsmethoden einsetzbar sind. So können der Speicher und auch das Interpolationsfilter eingesetzt werden, die für die Verarbeitung der digitalen Fernsehsignale (FBAS-Signale) eingesetzt werden können.

Die Erfindung wird nachfolgend anhand eines in dem Blockschaltbild dargestellten Ausführungsbeispiels näher erläutert.

In dem Blockschaltbild ist eingangsseitig ein A/D-Wandler 1 vorgesehen, an dessen Eingang bzw. Eingängen ein FBAS-Signal und/oder ein Bildsignal von einer externen Quelle, z.B. ein Signal von einem Videorecorder oder ein von anderen Bildspeichergeräten ankommendes FBAS-Signal, anliegen.

Es kann aber auch am Eingang ein MAC-Signal anliegen, das in gleicher Weise digitalisiert wird. Die digitalisierten Videosignale an den Ausgängen des A/D-Wandlers, je nach Norm, werden nachgeschalteten Farbdecodern 2a, 2b, 2c, zugeführt, die in einem Block 2 zusammengefaßt eingezeichnet sind. Der Videodecoder 2a ist für die Decodierung der Signale nach den Normen PAL und NTSC, der Videodecoder 2b für Signale nach der SECAM-Norm und der Videodecoder 2c für Signale nach der MAC-Norm vorgesehen. Am Ausgang des Videodecoders 2 liegen digitalisierte Y-, U- und V-Signale, also Y, R-Y bzw. B-Y, an. Diese Signale werden über einen Bus einem Interpolationsfilter 3 mit integrierter oder externer Rechenschaltung 9 zugeführt. Das Interpolationsfilter 3 setzt die Abtastwerte in Abhängigkeit von den mittels der Rechenschaltung 9 ermittelten Interpolationskoeffizienten um und nimmt eine Orthogonalisierung der Abtastwerte vor, wie dieses im FKTG-Tagungsband angegeben ist. Der Interpolationskoeffizient kann entweder ein Expansions- oder ein Kompressionsfaktor sein, was jeweils davon abhängt, ob die höhere Frequenz größer oder kleiner als das Doppelte der ersten Frequenz ist. Damit der Interpolationsfaktor jeweils ermittelt werden kann, ist es erforderlich, daß zum einen die der Norm entsprechend generierte erste Taktfrequenz, die bei PAL zweckmäßigerweise das Vierfache der Farbträgerfrequenz beträgt, also 17,734 MHz, bei NTSC 14,3 MHz und bei D2MAC 20,25 MHz, der Rechenschaltung zugeführt wird, ferner die zeilenverkoppelte höhere Frequenz, mit der das Auslesen der Speicher gesteuert wird. Anhand dieser beiden Taktfrequenzen wird der Interpolationsfaktor von der Recheneinheit ermittelt und dem Interpolationsfilter zur Steuerung der Filtercharakteristik für die Digitalfilterung zugeführt, so daß von dem Interpolationsfilter 3 orthogonalisierte, komprimierte oder expandierte Zeileninformationen ausgegeben werden, die mit der gleichen ersten normbedingten Taktfrequenz in dem nachfolgenden Speicher 4 gespeichert werden. Die in dem Halbbildspeicher 4 gespeicherten Signale werden sodann mit der höheren Taktfrequenz ausgelesen, so daß am Ausgang mit der doppelten Vertikalfrequenz ein Bild mit einer doppelten Anzahl von Halbbildern darstellbar ist und im Fall der Verwendung der eingangsseitigen Vertikalfrequenz mit der doppelten Zeilenfrequenz ein Bild aus dem Speicher ausgelesen wird, das die doppelte Zeilenzahl bei gleicher Vertikalfrequenz aufweist.

Dieses Ausgangssignal wird einem D/A-Wandler 5 zugeführt, an dessen Ausgängen Y, R-Y, B-Y Signale anliegen, die in einer Matrixschaltung 6 einer Dematrizierung unterworfen werden, so daß an dem Ausgang RGB-Signale zur Ansteuerung einer herkömmlichen Bildröhre abgreifbar sind. Die jeweiligen Taktfrequenzen werden in Abhängigkeit vom Erkennen der jeweiligen Norm oder durch Zwangsumschaltung auf die jeweilige Norm in einem Taktgenerator 7 erzeugt. Die daran vermerkten Taktfrequenzen A1, A2, A3 werden von diesem generiert und dienen als Systemtakt des A/D-Wandlers 1, des Decoders 2, des Interpolationsfilters 3 und zum Einschreiben in den Speicher 4, während eine feste von einer Steuerschaltung 8 generierte zeilenverkoppelte Frequenz (n f_{H}) zum Auslesen des Speichers und als Systemtakt des D/A-Wandlers 5 dient. Diese Frequenz beträgt z.B. 32 MHz. bzw. ist diese höher, wenn eine zusätzliche Komprimierung aus Anpassungsgründen bei der Formatsbeschreibung, beispielsweise 4:3 zur Darstellung auf einem Bildschirm 16:9, gewünscht ist. Diese Frequenzen können ebenfalls umschaltbar sein. Daraus ermittelt die Rechenschaltung jedoch jeweils einen neuen Interpolationsfaktor.

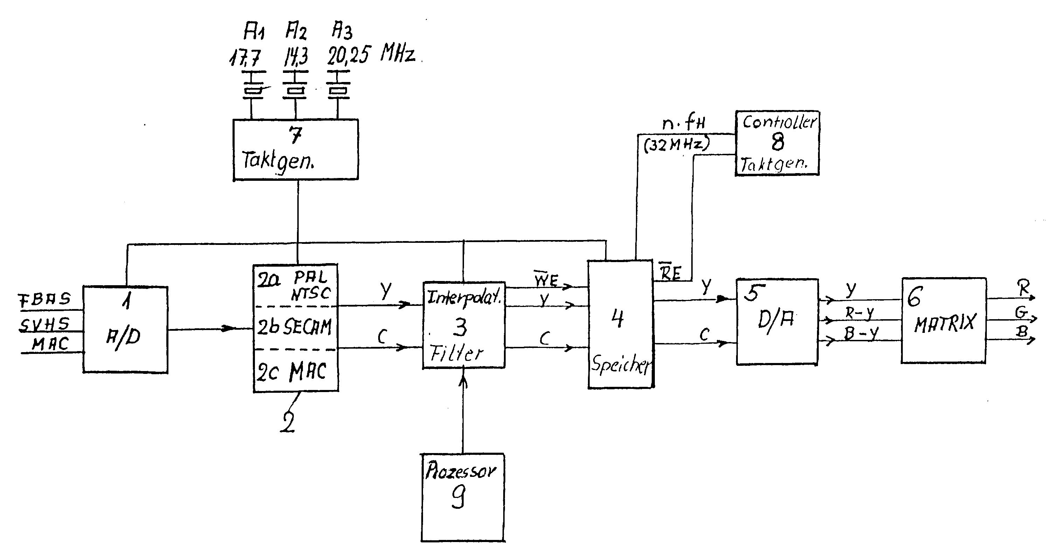

## Patentansprüche

1. Verfahren zum Umsetzen von digitalisierten Fernsehsignalen oder digitalen RGB-Signalen in einem Fernsehempfänger mit einer ersten Vertikalfrequenz in ein Fernsehsignal mit einer doppelten Vertikalfrequenz und/oder doppelten Zeilenfrequenzen, wobei die Fernsehsignale oder die RGB-Signale mit einer ersten Taktfrequenz für eine digitale Signalverarbeitung abgetastet werden und die Signale einer jeden Zeile in einem Speicher gespeichert werden und mit einer höheren, festdefinierten Taktfrequenz ausgelesen werden, mit den folgenden Verfahrensschritten :
a) das mit der ersten Taktfrequenz (A1, A2, A3) abgetastete Fernsehsignal wird einer horizontalen Kompression oder Expansion unterworfen;
b) der Kompressions- oder Expansionsfaktor wird aus dem Verhältnis der Hälfte der höheren Taktfrequenz zur ersten Taktfrequenz ermittelt;
c) mit dem ermittelten Kompressions- oder Expansionsfaktor wird ein Interpolationsfilter (3) zur Kompression und Expansion angesteuert, das die Abtastwerte unter Berücksichtigung der Faktoren in neue umsetzt;
d) die durch das Interpolationsfilter (3) umgesetzten Werte werden mit der ersten Taktfrequenz ausgegeben und mit der gleichen Frequenz in den Speicher (1) eingeschrieben;
e) die im Speicher (4) gespeicherten Abtastwerte werden mit der höheren Taktfrequenz (n · f_{H}) ausgelesen und den weiteren Signalaufbereitungs- (5, 6) und Bilddarstellungsschaltungen zugeführt;
f) die erste Taktfrequenz wird mittels eines manuell oder automatisch arbeitenden Normenschalters in Abhängigkeit von Signalen einer Erkennungsschaltung jeweils der Norm zugeordnet angelegt, oder es wird in Abhängigkeit von dem Erkennen oder Eingeben einer bestimmten Norm ein vorhandener Taktgenerator auf die dieser Norm zugeordnete erste Taktfrequenz umgeschaltet, wobei
g) die erste Taktfrequenz ein ganzes Vielfaches der Farbträgerfrequenz ist, und die höhere Frequenz ein ganzes Vielfaches der Zeilenfrequenz des mit der ersten Taktfrequenz abgetasteten Eingangssignals ist, und der Absolutwert mindestens dem Wert der ersten Taktfrequenz entspricht.

2. Verfahren nach Anspruch 1 für den Empfang von Fernsehsignalen nach der PAL-Norm, dadurch gekennzeichnet, daß die erste Taktfrequenz 17,734 MHz beträgt.

3. Verfahren nach Anspruch 1 für den Empfang von Fernsehsignalen nach der NTSC-Norm, dadurch gekennzeichnet, daß die erste Taktfrequenz 14,318 MHz beträgt.

4. Verfahren nach Anspruch 1 in Verbindung mit Fernsehsignalen nach der SECAM-Norm, dadurch gekennzeichnet, daß die erste Taktfrequenz eine freilaufende, festgelegte Abtastfrequenz ist, und daß die höhere Taktfrequenz ein ganzes Vielfaches der Zeilenfrequenz des Eingangssignals ist, wobei der Absolutwert mindestens dem Wert der ersten Taktfrequenz entspricht oder über der ersten Taktfrequenz liegt.

5. Verfahren nach Anspruch 4, dadurch gekennzeichnet, daß die erste Taktfrequenz 17,734 MHz beträgt.

6. Verfahren nach Anspruch 1 in Verbindung mit Fernsehsignalen der MAC-Norm.

7. Verfahren nach Anspruch 6, dadurch gekennzeichnet, daß die erste Taktfrequenz 20,25 MHz beträgt.

8. Verfahren nach Anspruch 1 in Verbindung mit digital übertragenen Fernsehsignalen, dadurch gekennzeichnet, daß die erste Taktfrequenz der Abtastfrequenz entspricht, mit der die anliegenden digitalen Signale abgetastet worden oder überabgetastet sind mit einem mit dem Farbträger verkoppelten Vielfache der Abtastfrequenz unter Berücksichtigung des Abtasttheorems.

9. Schaltungsanordnung zur Durchführung des Verfahrens nach einem der vorhergehenden Ansprüche, dadurch gekennzeichnet, daß ein oder mehrere A/D-Wandler (1) zur Wandlung des Fernsehsignals (FBAS-Signal) und/oder des Basisbandsignals (MAC-Signal) vorgesehen sind, in denen die anliegenden Signale in digitale Y-U-V (Y; R-Y; B-Y) Signale decodiert werden, daß ein Interpolationsfilter (3) vorgesehen ist, das eine Recheneinheit aufweist oder von einer separaten Recheneinheit (9) ansteuerbar ist, die einen Expansions- oder Kompressionsfaktor aus dem Verhältnis der Hälfte der festeingestellten höheren Taktfrequenz (n · f_{H}) zur ersten Taktfrequenz (A1, A2, A3) ermittelt, daß ein Zeilenspeicher, ein erster (4) und/oder ein zweiter Halbbildspeicher oder ein Vollbildspeicher vorgesehen sind, in den die horizontal expandierten oder komprimierten Daten zeilenweise mit der ersten Taktfrequenz (A1, A2, A3) eingeschrieben werden, und daß der Speicher mit der höheren Taktfrequenz (n · f_{H}) auslesbar ist, wobei im Falle der Verwendung von Halbbildspeicher oder Vollbildspeicher die eingespeicherten Zeilen halbbildweise oder progressiv auslesbar sind, und daß ein Umschalter vorgesehen ist, der in Abhängigkeit von der ermittelten oder fest vorgegebenen Norm Taktsignale an die Steuereinheit liegt oder in Abhängigkeit von der Norm entsprechende Taktsignale generiert.

10. Schaltungsanordnung nach Anspruch 9, dadurch gekennzeichnet, daß dem Speicher (4) ein D/A-Wandler (5) nachgeschaltet ist, und daß eine Matrizierschaltung (6) vorgesehen ist, die die am Ausgang des D/A-Wandlers (5) anliegenden Y-U-V-Signale(Y, R-Y, B-Y Signale) in RGB-Signale umwandelt.

11. Schaltungsanordnung nach Anspruch 9, dadurch gekennzeichnet, daß dem Speicher (4) ein digitaler Dematrizierer nachgeschaltet ist, und daß die von diesem abgreifbaren digitalisierten RGB-Signale zur Ansteuerung einzelnen Pixeln eines Flachbildschirms (LCD) oder einem D/A-Wandler zur Erzeugung analoger Ansteuersignale für eine Bildröhre zuführbar sind.

12. Schaltungsanordnung nach einem der Ansprüche 9 bis 11, dadurch gekennzeichnet, daß eine Steuereinheit vorgesehen ist, die die Taktfrequenzen zur Ansteuerung der einzelnen Schaltungen erzeugt.

13. Schaltungsanordnung nach Anspruch 9, dadurch gekennzeichnet, daß in die Speicher expandierte oder komprimierte digitale RGB-Signal einspeicherbar sind, und daß diese digitalisierten RGB-Signale mit der höheren Frequenz ausgelesen und D/A-Wandlern oder zur direkten Ansteuerung der Ansteuerschaltung einer Flachbildröhre zugeführt werden.

14. Schaltungsanordnung nach Anspruch 9, dadurch gekennzeichnet, daß die Schaltungen vor dem Speicher und die Einspeicherschaltung von einer ersten Steuerschaltung steuerbar sind, und daß das Auslesen der Daten und die Ansteuerung der nachgeschalteten digitalen Schaltungsanordnungen durch eine zweite Steuereinheit steuerbar sind.

15. Schaltungsanordnung nach Anspruch 14, dadurch gekennzeichnet, daß die beiden Steuereinheiten bezüglich der Horizontal- und Vertikalimpulse miteinander synchronisiert sind.

## Claims

1. Method of converting digitalised television signals or digital RGB signals in a television receiver with a first vertical frequency into a television signal with a doubled vertical frequency and/or doubled line frequencies, wherein the television signals or the RGB signals are scanned at a first pulse frequency for a digital signal processing and the signals of an each line are stored in a memory and read out at a higher, fixedly defined pulse frequency, with the following method steps:
a) the television signal scanned at the first pulse frequency (A1, A2, A3) is subjected to a horizontal compression or expansion;
b) the compression or expansion factor is determined from the ratio of half the higher clock frequency to the first pulse frequency;
c) an interpolation filter (3), which newly converts the scanning values with consideration of the factors, for the compression and expansion is controlled by the determined compression or expansion factor;
d) the values converted by the interpolation filter (3) are issued at the first pulse frequency and written-into the memory (1) at the same frequency;
e) the scanning values stored in the memory (4) are read out at the higher frequency (n · f_{H}) and fed to the further signal preparation (5, 6) and picture representation circuits;
f) the first cycle frequency is applied associated with the respective standard by means of a manually or automatically operating standards switch in dependence on signals of a recognition circuit, or a pulse generator is switched over to the first pulse frequency associated with a specific standard in dependence on the recognition or input of this standard, wherein
g) the first pulse frequency is an integral multiple of the colour carrier frequency and the higher frequency is an integral multiple of the line frequency of the input signal scanned at the first pulse frequency, and the absolute value corresponds at least to the value of the first pulse frequency.

2. Method according to claim 1 for reception of television signals according to the PAL standard, characterised in that the first pulse frequency amounts to 17.734 MHz.

3. Method according to claim 1 for reception of television signals according to the NTSC standard, characterised in that the first pulse frequency amounts to 14.318 MHz.

4. Method according to claim 1 in conjunction with television signals according to the SECAM standard, characterised in that the first pulse frequency is a free-running, fixed scanning frequency and that the higher pulse frequency is an integral multiple of the line frequency of the input signal, wherein the absolute value corresponds at least to the value of the first pulse frequency or lies above the first pulse frequency.

5. Method according to claim 4, characterised in that the first pulse frequency amounts to 17.734 MHz.

6. Method according to claim 1 in conjunction with television signals according to the MAC standard.

7. Method according to claim 6, characterised in that the first pulse frequency amounts to 20.25 MHz.

8. Method according to claim 1 in conjunction with digitally transmitted television signals, characterised in the first pulse frequency corresponds with the scanning frequency at which the applied digital signals have been scanned or scanned over at a multiple, which is coupled with the colour carrier, of the scanning frequency subject to consideration of the scanning theorem.

9. Circuit arrangement for carrying out the method according to one of the preceding claims, characterised in that one or more analog-to-digital converters (1) for conversion of the television signal (FBAS signal) and/or the base band signal (MAC signal) are provided, in which the applied signals are decoded into digital Y-U-V (Y; R-Y; B-Y) signals, that an interpolation filter (3) is provided, which comprises a computing unit or is controllable by a separate computing unit (9), which ascertains an expansion or compression factor from the ratio of half the fixedly set higher pulse frequency (n · f_{H}) to the first pulse frequency (A1, A2, A3), that a line memory, a first (4) and/or a second half-picture memory or a full-picture memory is or are provided, in which the horizontally expanded or compressed data are written in line-by-line at the first pulse frequency (A1, A2, A3), and that the memory with the higher pulse frequency (n · f_{H}) can be read out, wherein in the case of use of half-picture memory or full-picture memory the stored lines can be read out half-picture-by-half-picture or progressively, and that a changeover switch is provided which in dependence on the ascertained or fixedly preset standard applies pulse signals to the control unit or in dependence on the standard generates corresponding pulse signals.

10. Circuit arrangement according to claim 9, characterised in that a digital-to-analog converter (5) is connected behind the memory (4) and that a matrix circuit (6) is provided, which converts the applied Y-U-V signals (Y, R-Y, B-Y signals) at the output of the digital-to-analog converter (5) into RGB signals.

11. Circuit arrangement according to claim 9, characterised in that a digital dematriciser is connected behind the memory (4) and that the digitalised RGB signals that can be tapped therefrom can be fed for control of individual pixels of a flat display screen (LCD) or to a digital-to-analog converter for generation of analog control signals for a picture tube.

12. Circuit arrangement according to one of claims 9 to 11, characterised in that a control unit is provided which produces the pulse frequencies for control of the individual circuits.

13. Circuit arrangement according to claim 9, characterised in that expanded or compressed RGB signals are storable in the memory and that these digitalised RGB signals are read out at the higher frequency and are fed to digital-to-analog converters or for the direct control of the control circuit of a flat picture tube.

14. Circuit arrangement according to claim 9, characterised in that the circuits in front of the memory and the storing circuit are controllable by a first control circuit and that the reading out of data and the controlling of the digital circuit arrangements connected downstream are controllable by a second control unit.

15. Circuit arrangement according to claim 14, characterised in that the two control units are synchronised with one another with respect to the horizontal and vertical pulses.

## Revendications

1. Procédé de conversion de signaux de télévision numérisés ou de signaux RVB numérisés dans un récepteur de télévision avec une première fréquence verticale dans un signal de télévision à double fréquence verticale et/ou une double fréquence de ligne, les signaux télévisés ou les signaux RVB étant captés avec une première fréquence de cycle en vue d'un traitement numérique du signal et les signaux de chaque ligne sont enregistrés dans une mémoire et lus à une fréquence de cycle plus élevée et fixe, caractérisé en ce qu'il comporte les étapes suivantes :
a) le signal de télévision capté avec la première fréquence de cycle (A1, A2, A3) est soumis à une compression ou à une expansion horizontale ;
b) le facteur de compression ou d'expansion est déterminé à partir du rapport entre la moitié de la fréquence de cycle supérieure et la première fréquence de cycle ;
c) le facteur de compression ou d'expansion déterminé sert à actionner un filtre d'interpolation (3) pour la compression et l'expansion, qui convertit les valeurs de balayage en nouvelles valeurs compte tenu des facteurs ;
d) les valeurs transformées par le filtre d'interpolation (3) sont sorties avec une première fréquence de cycle et écrites à la même fréquence dans la mémoire (1) ;
e) les valeurs de balayage enregistrées dans la mémoire (4) sont lues à la fréquence de cycle supérieure (n.f_{H}) et amenées aux circuits de traitement du signal (5, 6) et d'affichage des images suivants ;
f) la première fréquence de cycle est associée à une norme au moyen d'un commutateur de norme fonctionnant manuellement ou automatiquement, en fonction des signaux d'un circuit de reconnaissance, ou bien un générateur de cycle existant est commuté à la première fréquence de cycle correspondant à une certaine norme en fonction de la reconnaissance ou de la saisie de cette norme,
g) la première fréquence de cycle représentant un multiple entier de la fréquence de porteuse des couleurs et la fréquence supérieure un multiple entier de la fréquence de ligne du signal d'entrée capté avec la première fréquence de cycle, et la valeur absolue correspond au moins à la valeur de la première fréquence de cycle.

2. Procédé selon la revendication 1 pour la réception de signaux de télévision selon la norme PAL, caractérisé en ce que la première fréquence de cycle est de 17,734 MHz.

3. Procédé selon la revendication 1 pour la réception de signaux de télévision selon la norme NTSC, caractérisé en ce que la première fréquence de cycle est de 14,318 MHz.

4. Procédé selon la revendication 1 appliqué à des signaux de télévision selon la norme SECAM, caractérisé en ce que la première fréquence de cycle est une fréquence de balayage spontanée déterminée, et en ce que la fréquence de cycle supérieure est un multiple entier de la fréquence de ligne du signal d'entrée, la valeur absolue correspondant au moins à la valeur de la première fréquence de cycle ou étant supérieure à la première fréquence de cycle.

5. Procédé selon la revendication 4, caractérisé en ce que la première fréquence de cycle est de 17,734 MHz.

6. Procédé selon la revendication 1 appliqué à des signaux de télévision selon la norme MAC.

7. Procédé selon la revendication 6, caractérisé en ce que la première fréquence de cycle est de 20,25 MHz.

8. Procédé selon la revendication 1 appliqué à des signaux de télévision transmis par des moyens numériques, caractérisé en ce que la première fréquence de cycle correspond à la fréquence de balayage avec laquelle les signaux numériques présents sont captés ou ajoutés avec un multiple de la fréquence de balayage couplé à la porteuse de couleur compte tenu du théorème de balayage.

9. Dispositif de circuits permettant la mise en oeuvre du procédé selon l'une ou l'ensemble des revendications précédentes, caractérisé en ce qu'un ou plusieurs convertisseurs A/N (1) sont prévus pour la conversion du signal de télévision (signal FBAS) ou du signal de bande de base (signal MAC), dans lesquels les signaux présents sont décodés en signaux numériques Y-U-V (Y ; R-Y ; B-Y), en ce qu'il est prévu un filtre d'interpolation (3) qui présente une unité de calcul ou qui peut être commandé par une unité de calcul séparée (9) déterminant un facteur d'expansion ou de compression à partir du rapport entre la moitié de la fréquence de cycle supérieure fixe (n.f_{H}) et la première fréquence de balayage (A1, A2, A3), en ce qu'il est prévu une mémoire de lignes, une première mémoire de demi-images (4) et/ou une deuxième mémoire de demi-images ou une mémoire d'images entières dans lesquelles les données expansées ou compressées latéralement sont inscrites ligne par ligne avec la première fréquence de cycle (A1, A2, A3), et en ce que la mémoire peut être lue à la fréquence de cycle supérieure (n.f_{H}), les lignes enregistrées pouvant être lues par demi-images ou progressivement dans le cas de mémoires de demi-images ou de mémoires d'images entières, et en ce qu'il est prévu un commutateur qui applique des signaux de cycle à l'unité de commande, en fonction de la norme déterminée ou prédéfinie, ou génère des signaux de cycle correspondant à la norme.

10. Dispositif de circuits selon la revendication 9, caractérisé en ce qu'un convertisseur N/A (5) est monté en aval de la mémoire (4) et en ce qu'il est prévu un circuit de matrice (6) qui convertit les signaux Y-U-V (signaux Y, R-Y, B-Y) présents à la sortie du convertisseur N/A (5) en signaux RVB.

11. Dispositif de circuits selon la revendication 9, caractérisé en ce qu'un dématriceur numérique est monté en aval de la mémoire (4) et en ce que les signaux RVB numérisés que peut capter celui-ci peuvent être utilisés pour produire des pixels sur un écran plat (à cristaux liquides) ou amenés à un convertisseur N/A pour produire des signaux de contrôle analogiques pour un tube cathodique.

12. Dispositif de circuits selon l'une ou l'ensemble des revendications 9 à 11, caractérisé en ce qu'il est prévu une unité de commande qui génère les fréquences de cycle pour le contrôle des différents circuits.

13. Dispositif de circuits selon la revendication 9, caractérisé en ce que les signaux RVB numériques expansés ou compressés dans la mémoire peuvent être enregistrés et en ce que ces signaux RVB numérisés sont lus à la fréquence supérieure et amenés à des convertisseurs N/A ou utilisés pour le contrôle direct du circuit de contrôle d'un tube cathodique pour écran plat.

14. Dispositif de circuits selon la revendication 9, caractérisé en ce que les circuits peuvent être commandés, en amont de la mémoire et du circuit de mise en mémoire, par un premier circuit de commande, et en ce que la lecture des données et la commande des circuits numériques montés en aval peuvent être contrôlées par une deuxième unité de commande.

15. Dispositif de circuits selon la revendication 14, caractérisé en ce que les deux unités de commande sont synchronisées l'une avec l'autre en ce qui concerne les impulsions horizontales et verticales.
